# FASCICULE DE BREVET EUROPEEN

(11) **EP 3 788 342 B1**
(45) Date de publication et mention de la délivrance du brevet: **24.07.2024**
(21) Numéro de dépôt: 19720672.5
(22) Date de dépôt: 03.05.2019
(51) Int. Cl.: G01N 1/22, B01D 45/12, B01L 3/00, C12M 1/26, G01N 1/24

(54) **DISPOSITIF DE COLLECTE DE PARTICULES OU DE MICRO-ORGANISMES**
VORRICHTUNG ZUM SAMMELN VON PARTIKELN ODER MIKROORGANISMEN
APPARATUS FOR COLLECTING PARTICLES OR MICROORGANISMES

(30) Priorité: 04.05.2018 FR 1853904
(43) Date de publication de la demande: 10.03.2021
(73) Titulaire: Bertin Technologies, 78180 Montigny-le-Bretonneux (FR)
(72) Inventeur: FOURNEL, Guillaume, 78000 Versailles (FR); DUVAUCHELLE, Laure, 78220 Viroflay (FR)
(74) Mandataire: Hautier IP
(86) Numéro de dépôt international: PCT/EP2019/061373
(87) Numéro de publication internationale: WO 2019/211436

(56) Documents cités:
- FR-A1- 2 905 379
- US-A1- 2008 076 171
- US-B1- 8 051 532

## Description

### DOMAINE

La présente invention concerne un dispositif de collecte de particules et/ou de microorganismes à des fins d'identification et de dénombrement ou de filtration de ces particules et/ou de microorganismes.

### CONTEXTE

L'identification et le dénombrement sont importants dans de nombreux domaines tels que l'industrie pharmaceutique, l'industrie agroalimentaire, le milieu médical, les services d'hygiène, les services vétérinaires, la surveillance de sites, etc, les dimensions des particules et microorganismes à collecter pouvant varier de 0,5 µm à plusieurs dizaines de microns.

On connaît, par le document FR-A-2 855 831, un dispositif de ce type qui comprend une enceinte amovible de centrifugation associée à des moyens d'aspiration d'air, l'enceinte comprenant une entrée et une sortie d'air et formant un récipient de transport d'un échantillon liquide contenant les particules et microorganismes collectés.

Avec un tel dispositif, c'est le même élément qui sert à la séparation et à la collecte des particules et des micro-organismes présents dans l'air ambiant et à leur transport aux fins d'analyse. Cela réduit les manipulations et diminue les risques de contamination des particules et micro-organismes collectés. Cela garantit que les particules et microorganismes analysés représentent 100 % des particules et microorganismes collectés.

Si ce type de dispositif s'avère intéressant, il ne permet toutefois pas une manipulation aisée de l'enceinte et impose que l'utilisateur dispose de ses deux mains à chaque instant de la manipulation pour positionner et enlever l'enceinte de sa liaison avec le bâti supportant les moyens d'aspiration.

Dans le document EP059583, il a été proposé d'utiliser une pluralité d'enceintes de diamètres différents de manière à autoriser une large plage de débits d'aspiration. On comprend là encore que la manipulation de plusieurs enceintes peut s'avérer délicate.

Le document US8051532 décrit un aspirateur avec un mécanisme de loquet pour le montage amovible d'un réceptacle à poussière. L'aspirateur comprend plus particulièrement un mécanisme de verrouillage comprenant un élément de conduit d'étanchéité. Le mécanisme de verrouillage réceptionne et guide le mouvement de l'élément de conduit d'étanchéité dans une position haute ou basse. Le mouvement de l'élément de conduit d'étanchéité induit, par soulèvement ou abaissement du fond du réceptacle à poussière, le mouvement du réceptacle à poussière. Ce mécanisme reste toutefois limité pour faciliter la manipulation du réceptacle.

Le document FR 2905379 A1 décrit un dispositif de collecte et de séparation de particules et de microorganismes présents dans l'air ambiant.

L'invention propose d'apporter une solution simple et efficace aux problèmes précités.

### RESUME DE L'INVENTION

A cette fin, la présente invention concerne un système de collecte de particules et/ou de micro-organismes en suspension dans un milieu gazeux selon la revendication 1, comprenant un dispositif d'aspiration et une enceinte de centrifugation et de collecte desdites particules et/ou micro-organismes :
- l'enceinte de centrifugation comprenant au moins un bord de guidage ainsi qu'une entrée d'air et une sortie d'air ;
- le dispositif comprenant :
   ∘ un bâti comportant un conduit d'aspiration d'air et qui peut comprendre des moyens d'aspiration,
   ∘ un organe comportant des moyens de guidage et de réception dudit au moins un bord de guidage de ladite enceinte, l'organe étant mobile relativement au conduit entre une première position dans laquelle ledit au moins un bord de guidage peut être guidé et réceptionné dans lesdits moyens de guidage et de réception et une seconde position de collecte des particules dans laquelle la sortie d'air de l'enceinte de centrifugation est appliquée sur une extrémité du conduit d'aspiration d'air.

Ainsi, selon l'invention, l'enceinte de centrifugation peut être réceptionnée dans des moyens de réception d'un organe mobile qui permet par son déplacement en translation l'application de la sortie de l'enceinte l'extrémité d'aspiration du conduit d'aspiration du système de collecte. On comprend qu'il est possible de positionner l'enceinte d'une seule main en réalisant tout d'abord une mise en position dudit au moins un bord de guidage dans les moyens de réception et en effectuant ensuite un déplacement de l'organe de manière à réaliser la jonction étanche entre la sortie de l'enceinte et l'extrémité du conduit d'aspiration.

Selon une autre caractéristique de l'invention, l'organe peut comprendre une partie tubulaire montée à coulissement autour de l'extrémité du conduit d'aspiration et comportant lesdits moyens de réception.

Encore plus précisément, les moyens de réception peuvent comprendre un logement de réception dudit au moins un bord de guidage, le logement étant délimité par un rebord, par exemple annulaire, dimensionné pour retenir ledit au moins un bord de guidage par gravité selon l'axe de la partie tubulaire.

Le rebord qui peut être annulaire peut être formé à une extrémité de la partie tubulaire et comprendre une ouverture de passage dudit au moins un bord de guidage de l'enceinte de centrifugation.

On notera que le bord de guidage peut être annulaire mais peut également avoir une autre forme, telle que par exemple une forme rectangulaire ou bien carré qui serait aussi adapté à une coopération avec les moyens de guidage et de réception. Le terme « bord de guidage » vise donc tout bord assurant la fonction indiquée sans être limitée à une forme particulière. Toutefois on notera que la forme annulaire à contour externe circulaire du bord de guidage est une forme facilitant l'introduction de celle-ci dans les moyens de guidage et de réception du fait de sa symétrie de révolution.

Dans cette réalisation pratique de l'invention, l'ouverture de passage permet l'introduction dudit au moins un bord de guidage de l'enceinte dans le logement de réception. Le mouvement de translation de l'organe assure ultérieurement la mise en communication fluidique de la sortie de l'enceinte avec l'entrée du conduit d'aspiration.

Selon une autre caractéristique de l'invention, une bague est montée en rotation autour dudit conduit d'aspiration et bloquée en translation sur ledit conduit, ladite bague étant accouplée en rotation audit organe de manière à ce qu'un mouvement de rotation de la bague induise un mouvement de translation de l'organe entre la première position de réception et la seconde position de collecte.

Cette réalisation permet de réaliser de manière simple et rapide un déplacement de l'organe entre sa première position et sa seconde position. La transformation du mouvement de rotation de la bague en mouvement de translation de l'organe peut être effectuée en réalisant un filetage externe sur l'organe et qui coopère avec un filetage interne correspondant de bague.

Selon encore une autre caractéristique de l'invention, la bague et l'organe mobile sont dimensionnés et positionnés l'un relativement à l'autre de manière à ce que lorsque l'organe est dans sa première position, l'ouverture de passage soit accessible pour l'introduction et la sortie dudit au moins un bord de guidage de l'enceinte et que lorsque l'organe est dans sa seconde position l'ouverture soit obturée par la bague.

Cette réalisation présente l'avantage de permettre un blocage de l'enceinte sur le dispositif de collecte lorsque l'organe est dans sa seconde position interdisant dès lors le retrait de l'enceinte de centrifugation.

L'enceinte de centrifugation peut comprendre une première partie tronconique reliée de manière amovible à une seconde partie comportant l'entrée d'air qui est entourée extérieurement par une jupe cylindrique. La jupe cylindrique permet de protéger l'entrée d'air en évitant l'introduction des grosses particules dans l'enceinte. La fixation amovible permet de ne conserver que la première partie tronconique après collecte et d'obturer son ouverture avec un couvercle, limitant ainsi le volume l'encombrement de la partie à manipuler à la seule première partie.

La première partie est de préférence fixée par vissage sur la seconde partie.

Avantageusement, la seconde partie comprend ledit au moins un bord de guidage qui entoure ladite sortie d'air. Ledit au moins un bord de guidage peut comprendre une collerette annulaire qui s'étend de préférence sensiblement radialement à l'axe de l'enceinte.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'un système selon l'invention ;
- la figure 2 est une vue schématique en perspective et du dessus du système selon l'invention, un capot de carénage ayant été retiré ;
- la figure 3 est une vue schématique en perspective de la liaison entre une enceinte de centrifugation et de collecte et un dispositif d'aspiration ;
- la figure 4 est une vue schématique en perspective similaire à la figure 3 dans laquelle la bague rotative a été retirée ;
- la figure 5 est une vue schématique en perspective du conduit d'aspiration d'air du système selon l'invention ;
- la figure 6 est une vue schématique en perspective de l'organe de guidage et de réception de l'enceinte ;
- les figures 7 à 10 représentent des différentes pièces d'assemblage pour réaliser la liaison entre le dispositif d'aspiration et l'enceinte dans le cadre d'une réalisation possible de l'invention ;
- les figures 11A et 11B sont des vues schématiques en perspective d'une enceinte de de centrifugation et de collecte destinée à être utilisée dans un dispositif selon l'invention ;
- la figure 12 est une vue schématique en perspective de la première partie de l'enceinte ;
- la figure 13 est une vue schématique en perspective de la seconde partie de l'enceinte, cette seconde partie étant destinée à être fixée de manière amovible à la première partie représentée en figure 12 ;
- les figures 14 et 15 sont des vues schématiques en perspective d'une enceinte dans laquelle la seconde partie n'est pas représentée en totalité pour faciliter la visualisation des caractéristiques de l'enceinte.

### DESCRIPTION DETAILLEE

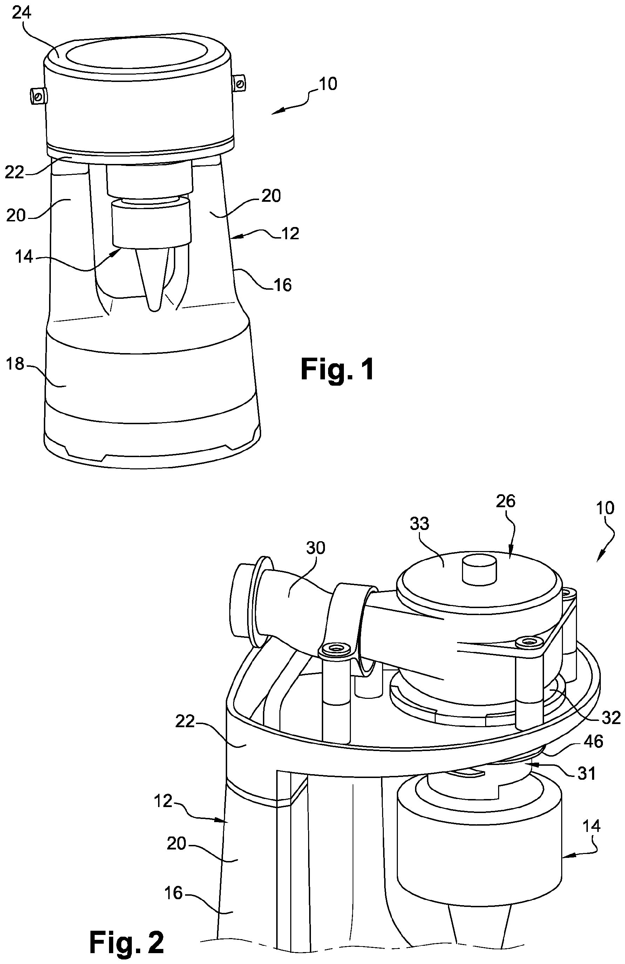

On se réfère maintenant à la figure 1 qui représente un système 10 de collecte de particules selon l'invention comprenant un dispositif 12 d'aspiration et une enceinte 14 de centrifugation et de collecte de particules présentes dans l'air ambiant, l'enceinte 14 étant ici fixée au dispositif 12.

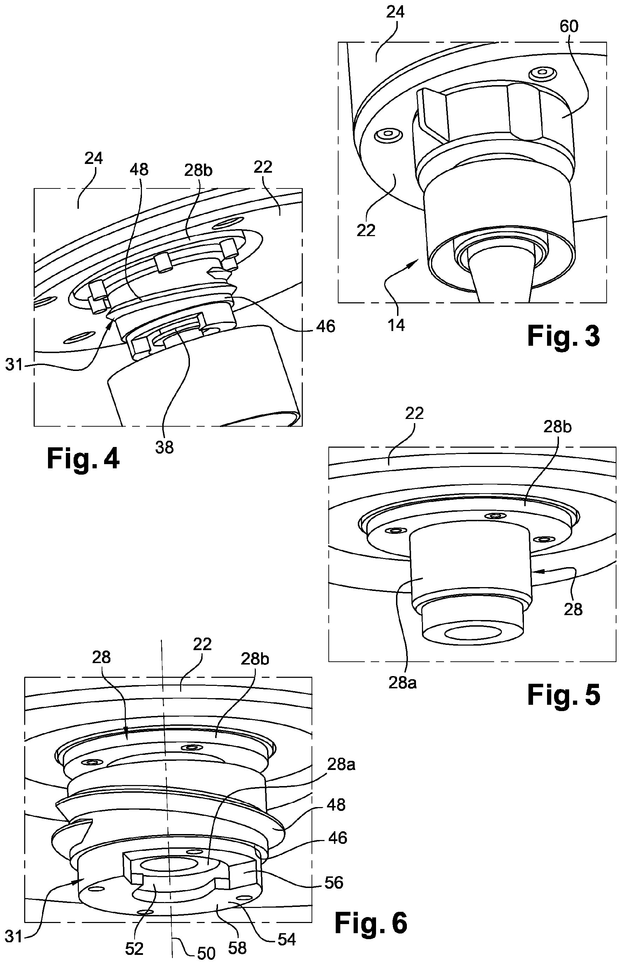

Le dispositif 12 comprend un bâti 16 comportant une embase 18 de support depuis laquelle s'étend deux bras 20 de liaison à une semelle 22 supérieure portant un capot 24 et supportant une roue d'aspiration 26 reliée en amont à un conduit d'aspiration 28 (figure 5) orientée sensiblement verticalement et en aval à un conduit 30 de sortie d'air à l'extérieur du système 10. La roue d'aspiration 26 est entrainée en rotation par un moteur agencée dans l'embase 18 et non visible sur les figures.

Le dispositif 12 d'aspiration comprend en outre un organe 31 mobile monté autour du conduit 28 d'aspiration. Comme on peut le voir sur les figures 2, 5, et 6 à 10, le conduit 28 d'aspiration d'air comprend une première partie 28a inférieure et une seconde partie 28b supérieure qui présente un diamètre externe supérieur à la première partie inférieure 28a. L'extrémité supérieure du conduit 28 d'aspiration est reliée à une bride 32 annulaire radiale qui est fixée, dans le cas présent par boulonnage, sur la semelle 22 supérieure. On remarque également que le carter 33 de la roue 26 d'aspiration est supporté par la bride 32 annulaire radiale qui est appliquée sur la surface supérieure de la semelle 22, le conduit 28 d'aspiration étant introduit au travers d'un orifice de la semelle 22 et la bride annulaire 32 radiale assurant une retenue de l'ensemble avant fixation.

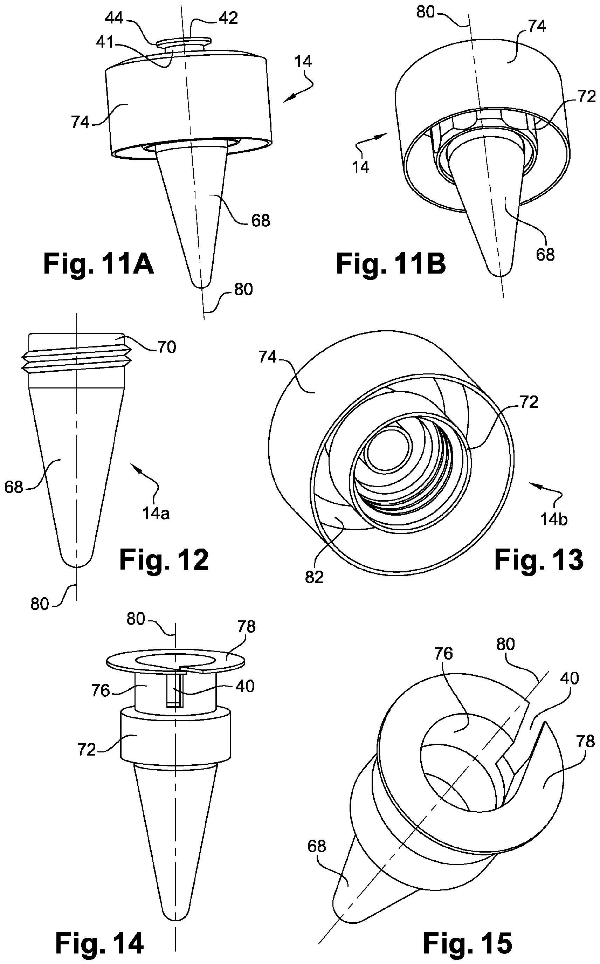

Selon l'invention, l'organe mobile 31 comprend des moyens de guidage et de réception d'un bord de guidage de l'enceinte. De façon équivalente, les moyens de guidage et de réception peuvent être désignés comme un récepteur configuré de façon à guider un bord de guidage de l'enceinte. Avant de réaliser une description détaillée de l'enceinte 14 de centrifugation et de collecte, il est tout de même indiqué que celle-ci comprend au moins un bord 38 de guidage ainsi qu'une entrée d'air 40 et une sortie 42 d'air (figures 11A et 15). Plus précisément, elle comprend un bord 38 continu de guidage qui est ici une collerette annulaire qui entoure sa sortie d'air 42. On comprend que le bord 38 de guidage pourrait être discontinu et ne pas s'étendre angulairement autour de la sortie d'air 42 sans que cela n'affecte le fonctionnement de l'invention comme cela ressortira à l'évidence de ce qui suit.

Dans la réalisation représentée aux figures, l'organe mobile 31 est formé par une partie tubulaire 46 portant sur la ou sa surface externe un filetage 48 s'étendant autour de l'axe 50 de la partie tubulaire 46. La partie tubulaire 46 comprend une extrémité supérieure et une extrémité inférieure, cette dernière extrémité comprenant les moyens de guidage et de réception lesquels comportent un logement 52 de réception du bord 38 ou collerette de guidage de l'enceinte 14 (figure 6). Comme cela est plus particulièrement visible sur les figures 4 et 6, le logement 52 est délimité par un rebord annulaire 54 de l'extrémité inférieur de la partie tubulaire 46. Ce rebord 54 annulaire comprend une portion 56 de paroi sensiblement cylindrique et une portion 58 de paroi annulaire radiale par rapport à l'axe 50 de la partie tubulaire 46. On remarque que la portion 56 de paroi cylindrique et la portion 58 de paroi annulaire radiale ne s'étendent pas sur 360° mais sur une angle d'environ 280° et délimitent ensemble au niveau de leurs extrémités libres une ouverture de passage pour l'introduction de la collerette 38 annulaire de l'enceinte 14 de centrifugation et de collecte. Egalement, la portion 58 de paroi annulaire radiale est dimensionnée de manière à ce que la collerette 38 annulaire puisse être retenue dans la direction de l'axe 50 de la partie tubulaire 46 après réception de la collerette 38 dans le logement 52 de réception. La portion 58 annulaire radiale délimite intérieurement une ouverture dans laquelle est montée le conduit 41 de sortie d'air 42 de l'enceinte 14.

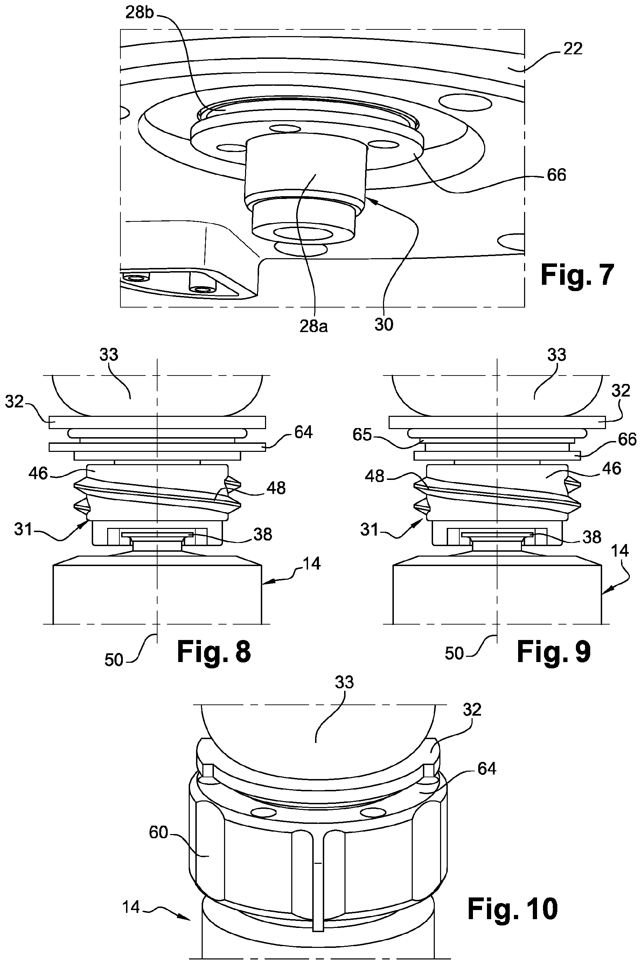

La figure 3 ainsi que la figure 10 représente une bague 60 montée rotative autour de l'organe 31 et qui coopère avec celle-ci de manière à ce que la rotation de la bague 60 induise un coulissement vers le haut de l'organe 31 conduisant à ce que la sortie 42 d'air de l'enceinte 14 vienne s'appliquer et se serrer sur l'extrémité inférieure de la première partie 28a du conduit d'aspiration 28 d'air pour réaliser une jonction étanche entre l'enceinte 14 et le conduit 28 d'aspiration d'air. Pour cela, la bague 60 comprend des moyens, tels qu'un filetage réalisé sur sa surface interne (non représenté), coopérant avec le filetage externe 48 de l'organe mobile 31. La bague 60 qui est ici représentée est une bague de serrage qui est montée en rotation autour de la première partie 28a du conduit 28 d'aspiration mais est bloquée en translation ou coulissement par rapport au conduit 28 d'aspiration.

Les figures 8 et 9 représentent les différentes pièces permettant de réaliser le mouvement de rotation de la bague 60 autour du conduit 28 aux fins de déplacement à coulissement de l'organe 31. Le dispositif 12 selon l'invention comprend ainsi un premier anneau 64 engagé autour de la seconde partie du conduit d'aspiration. Le premier anneau 64 est bloqué vers le haut par un épaulement 65 de la seconde partie 28b du conduit 28 d'aspiration (figure 9) et est bloqué vers le bas par un second anneau 66 monté autour de la première partie 28a du conduit 28 d'aspiration (figure 8). Le premier anneau 64 est vissé dans la paroi annulaire radiale formant un épaulement 65 de séparation de la première partie 28a du conduit 28 d'aspiration et de la seconde partie 28b du conduit 28 d'aspiration. Ainsi, le premier anneau 64 est bloqué en translation sur le conduit 28 d'aspiration. Comme cela est bien visible sur la figure 10, la bague 60 de serrage est rendue solidaire du premier anneau 64 au moyen par exemple de boulonnage.

Il est donc clair que l'organe mobile 31 permet le guidage et la réception d'un bord 38 de l'enceinte 14 dans une première position de réception dudit bord dans le logement 52 de l'organe 31. Le déplacement à coulissement de l'organe 31 est assuré par la bague 60 qui permet de déplacer l'organe 31 dans sa seconde position dans laquelle la sortie d'air 42 de l'enceinte 14 de centrifugation est appliquée sur une extrémité inférieure du conduit 28 d'aspiration d'air.

Egalement, comme cela est visible sur la figure 3, la bague 60 et l'organe mobile 31 sont dimensionnés et positionnés l'un relativement à l'autre de manière à ce que lorsque l'organe 31 est dans sa première position, l'ouverture de passage soit accessible pour l'introduction et la sortie de la collerette 38 de guidage de l'enceinte 14 et que lorsque l'organe 31 est dans sa seconde position l'ouverture soit obturée par la bague 60 (figure 3).

On se réfère maintenant aux figures 11A, 11B et 12 à 15 qui représentent une enceinte 14 selon l'invention. Cette enceinte 14 comprend deux parties 14a, 14b distinctes, à savoir une première partie 14a (figure 12) et une seconde partie 14b (figure 13). La première partie 14a comprend une portion 68 inférieure tronconique reliée à une portion 70 supérieure cylindrique comprenant un filetage externe ou tout autre moyen permettant la solidarisation de manière amovible à la seconde partie 14b de l'enceinte 14. La section de la portion tronconique 68 se réduit depuis la portion 70 supérieure cylindrique et jusqu'à son extrémité.

La seconde partie 14b comprend une première portion 72 cylindrique coaxiale à une jupe 74 cylindrique externe. La première portion 72 cylindrique comprend un filetage interne ou tout autre moyen permettant la solidarisation de manière amovible à la première partie 14a de l'enceinte 14. La première portion 72 cylindrique est reliée une seconde portion 76 cylindrique de diamètre inférieure au diamètre de la première portion cylindrique 72 et est reliée à l'opposé de la première portion cylindrique 72 à un rebord annulaire radial 78 par rapport à l'axe 80 de l'enceinte 14. Une ouverture 40 est ménagée au travers de la seconde portion 76 cylindrique et du rebord annulaire 78 radial et forme l'entrée d'air de l'enceinte 14. La jupe cylindrique 74 externe est reliée à une paroi annulaire radiale 82 s'étendant radialement vers l'intérieur et reliée intérieurement à un conduit 41 de sortie d'air portant à une extrémité la collerette annulaire 38 Le rebord annulaire 78 radial est appliqué et fixé sur la paroi radiale 82 de manière à ce que le conduit 41 de sortie soit coaxial avec l'axe 80 de l'enceinte 14.

En fonctionnement l'air chargé de particules d'intérêt circule par l'entrée d'air 42 de la seconde partie 14b de l'enceinte 14 puis est centrifugé dans le première partie 14a et remonte par la partie centrale du cône pour sortir par le conduit 41 de sortie. Il s'écoule ensuite dans le conduit 28 d'aspiration. Après que l'opération de collecte a été réalisée, l'enceinte 14 de centrifugation et de collecte est retirée du dispositif d'aspiration puis la première partie 14a de l'enceinte 14 est séparée de la seconde partie 14b. La première partie 14a de l'enceinte 14 est ensuite recouverte par un couvercle d'obturation venant se fixer à l'aide du filetage de sa portion cylindrique 70.

## Revendications

1. Système (10) de collecte de particules et/ou de microorganismes en suspension dans un milieu gazeux comprenant un dispositif (12) d'aspiration et une enceinte (14) de centrifugation et de collecte desdites particules et/ou micro-organismes, l'enceinte (14) de centrifugation comprenant au moins un bord (38) de guidage, ainsi qu'une entrée (40) d'air et une sortie (42) d'air ; le dispositif (12) comprenant un bâti (16) comportant un conduit (28) d'aspiration d'air, et le dispositif (12) comprenant un organe (31) comportant des moyens de guidage et de réception (52) dudit au moins un bord (38) de guidage de ladite enceinte (14), l'organe (31) étant mobile relativement au conduit (28) entre une première position dans laquelle ledit au moins un bord (38) de guidage peut être guidé et réceptionné dans lesdits moyens de guidage et de réception et une seconde position de collecte des particules dans laquelle la sortie (42) d'air de l'enceinte (14) de centrifugation est appliquée sur une extrémité du conduit (28) d'aspiration d'air,
le système comprenant en outre une bague (60) montée en rotation autour dudit conduit (28) d'aspiration et bloquée en translation sur ledit conduit (28), ladite bague (60) étant accouplée en rotation audit organe (31) de manière à ce qu'un mouvement de rotation de la bague (60) induise un mouvement de translation de l'organe (31) entre la première position de réception et la seconde position de collecte.

2. Système selon la revendication 1, dans lequel l'organe (31) comprend une partie tubulaire (46) montée à coulissement autour du conduit (28) d'aspiration et comportant lesdits moyens de réception.

3. Système selon la revendication 2, dans lequel les moyens de réception comprennent un logement (52) de réception dudit au moins un bord (38) de guidage, ce logement étant délimité par un rebord (54), par exemple annulaire, dimensionné pour retenir ledit au moins un bord (38) de guidage par gravité selon l'axe (50) de la partie tubulaire (46).

4. Système selon la revendication 3, dans lequel le rebord (54) est formé à une extrémité de la partie tubulaire (46) et comprend une ouverture de passage dudit au moins un bord (38) de guidage de l'enceinte (14) de centrifugation.

5. Système selon la revendication 1, dans lequel ledit organe (31) comprend un filetage (48) externe coopérant avec un filetage interne correspondant de bague (60).

6. Système selon la revendication 4, ou selon la revendication 4 en combinaison avec la revendication 5, dans lequel la bague (60) et l'organe mobile sont dimensionnés et positionnés l'un relativement à l'autre de manière à ce que lorsque l'organe (31) est dans sa première position, l'ouverture de passage soit accessible pour l'introduction et la sortie dudit au moins un bord (38) de guidage de l'enceinte et que lorsque l'organe est dans sa seconde position l'ouverture soit obturée par la bague (60).

7. Système selon l'une des revendications 1 à 6, dans lequel il comprend des moyens d'aspiration (26) portés par le bâti (16).

8. Système selon l'une des revendications 1 à 6, dans lequel l'enceinte (14) de centrifugation comprend une première partie (14a) tronconique reliée de manière amovible à une seconde partie (14b) comportant l'entrée d'air qui est entourée extérieurement par une jupe cylindrique (74).

9. Système selon la revendication 8, dans lequel ladite première partie (14a) est fixée par vissage sur la seconde partie.

10. Système selon la revendication 8 ou 9, dans lequel la seconde partie (14b) comprend ledit au moins un bord de guidage qui entoure ladite sortie (42) d'air.

11. Système selon l'une des revendications 1 à 10, dans lequel ledit au moins un bord (38) de guidage comprend une collerette annulaire.

## Patentansprüche

1. System (10) zum Sammeln von Partikeln und/oder Mikroorganismen, die in einem gasförmigen Medium suspendiert sind, umfassend eine Ansaugvorrichtung (12) und ein Gehäuse (14) zum Zentrifugieren und Sammeln der Partikel und/oder Mikroorganismen, wobei das Zentrifugationsgehäuse (14) wenigstens einen Führungsrand (38) sowie einen Lufteinlass (40) und einen Luftauslass (42) aufweist; wobei die Vorrichtung (12) ein Gestell (16) mit einer Luftansaugleitung (28) umfasst, und wobei die Vorrichtung (12) ein Organ (31) umfasst, das Mittel zur Führung und Aufnahme (52) des wenigstens einen Führungsrandes (38) des Gehäuses (14) aufweist, wobei das Organ (31) relativ zu der Leitung (28) zwischen einer ersten Position, in der die wenigstens eine Führungskante (38) in den Führungs- und Aufnahmemitteln geführt und aufgenommen werden kann, und einer zweiten Partikelsammelposition, in der der Luftauslass (42) des Zentrifugationsgehäuses (14) an ein Ende der Luftansaugleitung (28) angelegt wird, beweglich ist,
wobei das System weiter einen Ring (60) umfasst, der drehbar um die Ansaugleitung (28) montiert und translatorisch an der Leitung (28) blockiert ist, wobei der Ring (60) drehbar mit dem Organ (31) gekoppelt ist, so dass eine Drehbewegung des Rings (60) eine translatorische Bewegung des Organs (31) zwischen der ersten Aufnahmeposition und der zweiten Sammelposition induziert.

2. System nach Anspruch 1, wobei das Organ (31) einen röhrenförmigen Teil (46) umfasst, der gleitend um die Ansaugleitung (28) herum angebracht ist und die Aufnahmemittel aufweist.

3. System nach Anspruch 2, wobei die Aufnahmemittel einen Sitz (52) zur Aufnahme des wenigstens einen Führungsrands (38) umfassen, wobei der Sitz durch einen beispielsweise ringförmigen Rand (54) begrenzt ist, der so bemessen ist, dass er den wenigstens einen Führungsrand (38) durch Schwerkraft entlang der Achse (50) des röhrenförmigen Teils (46) zurückhält.

4. System nach Anspruch 3, wobei der Rand (54) an einem Ende des röhrenförmigen Teils (46) ausgebildet ist und eine Durchgangsöffnung für den wenigstens einen Führungsrand (38) des Zentrifugationsgehäuses (14) umfasst.

5. System nach Anspruch 1, wobei das Organ (31) ein äußeres Gewinde (48) aufweist, das mit einem entsprechenden inneren Gewinde des Rings (60) zusammenwirkt.

6. System nach Anspruch 4 oder nach Anspruch 4 in Kombination mit Anspruch 5, wobei der Ring (60) und das bewegliche Organ so dimensioniert und relativ zueinander positioniert sind, dass, wenn sich das Organ (31) in seiner ersten Position befindet, die Durchgangsöffnung für die Einführung und den Austritt des wenigstens einen Führungsrandes (38) des Gehäuses zugänglich ist, und dass, wenn sich das Organ in seiner zweiten Position befindet, die Öffnung durch den Ring (60) verschlossen ist.

7. System nach einem der Ansprüche 1 bis 6, wobei es von dem Gestell (16) getragene Ansaugmittel (26) umfasst.

8. System nach einem der Ansprüche 1 bis 6, wobei das Zentrifugationsgehäuse (14) einen ersten kegelstumpfförmigen Teil (14a) umfasst, der lösbar mit einem zweiten Teil (14b) verbunden ist, der den Lufteinlass umfasst, der außen von einer zylindrischen Schürze (74) umgeben ist.

9. System nach Anspruch 8, wobei der erste Teil (14a) durch Verschrauben an dem zweiten Teil befestigt ist.

10. System nach Anspruch 8 oder 9, wobei der zweite Teil (14b) den wenigstens einen Führungsrand umfasst, der den Luftauslass (42) umgibt.

11. System nach einem der Ansprüche 1 bis 10, wobei die wenigstens eine Führungskante (38) einen ringförmigen Kragen umfasst.

## Claims

1. A system (10) for collecting particles and/or microorganisms suspended in a gaseous medium comprising a suction device (12) and an enclosure (14) for centrifuging and collecting said particles and/or microorganisms, the centrifugation enclosure (14) comprising at least one guide edge (38), as well as an air inlet (40) and an air outlet (42); the device (12) comprising a frame (16) including an air suction conduit (28) and the device (12) comprising a member (31) including means for guiding and receiving (52) said at least one guide edge (38) of said enclosure (14), the member (31) being movable relative to the conduit (28) between a first position in which said at least one guide edge (38) can be guided and received in said guide and receiving means and a second particles collection position in which the air outlet (42) of the centrifugation enclosure (14) is applied on one end of the air suction conduit (28),
the system further comprising a ring (60) which is rotatably mounted around said suction conduit (28) and blocked in translation on said conduit (28), said ring (60) being coupled in rotation to said member (31) so that a rotational movement of the ring (60) induces a translational movement of the member (31) between the first receiving position and the second collecting position.

2. The system according to claim 1, wherein the member (31) comprises a tubular portion (46) which is slidably mounted around the suction conduit (28) and including said receiving means.

3. The system according to claim 2, wherein the receiving means comprise a housing (52) for receiving said at least one guide edge (38), this housing being delimited by a rim (54), for example an annular rim, which is dimensioned to retain said at least one gravity guide edge (38) along the axis (50) of the tubular portion (46).

4. The system according to claim 3, wherein the rim (54) is formed at one end of the tubular portion (46) and comprises an opening for passage of said at least one guide edge (38) of the centrifugation enclosure (14).

5. The system according to claim 1, wherein said member (31) comprises an external thread (48) cooperating with a corresponding internal thread of the ring (60).

6. The system according to claim 4, or according to claim 4 in combination with claim 5, wherein the ring (60) and the movable member are dimensioned and positioned relative to each other so that when the member (31) is in its first position, the passage opening is accessible for the insertion and the exit of said at least one guide edge (38) of the enclosure and that when the member is in its second position the opening is sealed by the ring (60).

7. The system according to one of claims 1 to 6, wherein it comprises suction means (26) carried by the frame (16).

8. The system according to one of claims 1 to 6, wherein the centrifugation enclosure (14) comprises a first frustoconical portion (14a) which is removably connected to a second portion (14b) including the air inlet which is surrounded externally by a cylindrical skirt (74).

9. The system according to claim 8, wherein said first portion (14a) is fastened by screwing to the second portion.

10. The system according to claim 8 or 9, wherein the second portion (14b) comprises said at least one guide edge which surrounds said air outlet (42).

11. The system according to one of claims 1 to 10, wherein said at least one guide edge (38) comprises an annular flange.
